# EUROPEAN PATENT SPECIFICATION

(11) **EP 2 139 201 B1**
(45) Date of publication and mention of the grant of the patent: **26.12.2018**
(21) Application number: 08290611.6
(22) Date of filing: 25.06.2008
(51) Int. Cl.: H04L 29/08, H04L 29/06

(54) **P2P Video streaming with QoS guarantees**
P2P Video Streaming mit QoS-Garantien
Flux vidéo P2P doté de garanties de qualité de service

(43) Date of publication of application: 30.12.2009
(73) Proprietor: Alcatel Lucent, 91620 Nozay (FR)
(72) Inventor: Tsang, Ing-Jyh, B - 9250 Waasmunster (BE); Van Caenegem, Tom, B - 9820 Schelderode (BE)
(74) Representative: Nokia EPO representatives

(56) References cited:
- US-A1- 2002 162 109
- US-A1- 2004 015 995
- DITZE M ET AL: "Improving content replication and QoS in distributed peer-to-peer VoD appliances" DISTRIBUTED COMPUTING SYSTEMS WORKSHOPS, 2004. PROCEEDINGS. 24TH INTER NATIONAL CONFERENCE ON HACHIOJI, TOKYO, JAPAN 23-24 MAR. 2004, PISCATAWAY, NJ, USA,IEEE, 23 March 2004 (2004-03-23), pages 78-84, XP010695587 ISBN: 978-0-7695-2087-2

## Description

The present invention relates to a Peer-to-Peer P2P control server coupled to a plurality of end-users via at least one network-node NW element in a communication network, each end-user comprising storage means for storing multimedia content and said network-node NW element being adapted to transfer such multimedia content, said P2P control server being adapted to control the storage means of said plurality of end-users.

Services that make use of Peer-to-Peer P2P technologies, where each peer end-user at the same time acts as client and server, are today always implemented over Layer-3 L3 (the Internet) and treated in the communication network as Best Effort.

However, streaming multimedia content such as video services consume huge bandwidth BW, can be very bursty and the Quality-of-Experience QoE by the end-user consuming the video streaming service is rather sensitive to packet loss.

Today, different solutions exist to increase this Quality-of-Experience QoE, i.e. the measure of how good the end-user perceives the service, or Quality-of-Service QoS, i.e. the measure of how good the data is delivered to the end-user (how much packet loss, jitter, delay, etc.).

In a first known solution, an IPTV Service Provider ITSP makes use of a client-server architecture where all the end-users are the clients and dedicated multimedia, e.g. video, servers installed in the network store video contents, which can be requested by the clients. Video sessions will be assigned a certain guaranteed QoS to meet the end-user QoE expectations (e.g. negligible packet loss, delay, jitter).

A second and different way to offer video services is over the Best Effort Internet using advanced P2P models that will allow certain resilience.

A third possible solution is known from the International Patent Application WO 02/089488 A1 entitled "P2P NETWORK ARCHITECTURE FOR DISTRIBUTED STORAGE" filed by Koninklijke Philips Electronics N.V. (NL) on April 26, 2001. Therein, an electronic delivery system uses a network of end-users devices around a hub. Each end-user device has a storage capability. Content is stored in a distributed fashion on the network of these end-user devices for being made available to individual one of these devices in a P2P fashion so as to cut download time and reduce transmission errors. The main claim of this Application recites a method of enabling multiple end-users to receive content information, the method comprising:
- supplying the content information to a hub; and
- using a peer-to-peer network of respective devices residing at respective ones of the end-users and connected to the hub for distributed storage of the content information on the network under control of the hub.

Unfortunately, all these known solutions show disadvantages.

In more detail, in the first known solution, the ITSP using the client server model will face scalability problems once the IPTV service take-up increases dramatically. It will have to equip its IPTV network with (on-demand) video servers that can handle many requests and that can stream many video streams simultaneously. The same scalability issue may arise for the network-node NW elements in between the Video Servers and the clients (encompassing the IP edge, the metro switching nodes, the access nodes and all data links in between these network-node NW elements). By using IPTV proxies which are placed more close to the end-users (e.g. ISAM), this scalability problem can be partly relieved, but this requires again serious investments in such proxies with costly large memory for storage and caching of video contents.

Using, as in the second known solution, the Best Effort Internet and P2P architecture for video services where each end-user may also act as server (the video content stored on a first end-user's Set-Top-Box STB can be streamed to a second peer end-user requesting the same video, directly from the first end-user, instead of from a network-node server or proxy), takes away the scalability issue with respect to video server equipment, but still the network-node NW will be heavily loaded, as e.g. two neighbors interacting as peers will result in a video stream all the way to the ISP (over the IP edge) and back. Furthermore no QoS guarantees will be provided as this is a service on top of best-effort.

In the third known solution, i.e. the Patent Application WO 02/089488, a P2P architecture/method is proposed consisting of several hubs, with the hubs being interconnected and end-users forming a peer-to-peer network community around each hub. This hub itself stores video content and is responsible for distributing the content among all end-user devices and is also responsible for controlling these end-user devices for supplying the stored content to other peer end-user devices.

An object of the present invention is to provide a communication network wherein both the Quality-of-Experience QoE and the Quality-of-Service QoS are increased with respect to that of the known solutions.

According to the invention, this object is achieved due to the fact that said P2P control server is further adapted to control said network-node NW element to transfer multimedia content between the storage means of distinct end-users.

In this way, instead of introducing hubs which have to store content as well, a P2P control servers that do not store video content data themselves is used. This P2P control server not only controls the end-devices or end-users, but also the network-node NW element in between distinct end-users. As a consequence, an optimal path can take place with appropriate QoS support transfer. The difference with P2P streaming over the best effort Internet is that the P2P streaming now occurs in a closed environment of the IP provider and under strict control of the IP provider, allowing service / BW guarantees and DRM.

Owing to the P2P control server, multimedia or video services (such as VoD and Time Shifted TV), P2P architectures (that allow direct interconnection between two or more end-users) and Quality-of-Service QoS are brought together.

It is to be noted that the Patent Application US 2002/162109 A1 (SHTEYN YEVGENLY EUGENE [US]) of 31 October 2002 and entitled "Distributed storage on a P2P network architecture" discloses an electronic content delivery system that uses a network of end-user devices around a hub. Each end-user device has storage capability. Content is stored in a distributed fashion on the network of these end-user devices for being made available to individual ones of these devices in a P2P fashion so as to cut download time and reduce transmission errors.

In this known document the transfer of multimedia content between storage means of distinct end-users is controlled by a software component that interacts with look-up service to obtain information about the network location of the selected content. The software component and look-up service are both included in an end-user system coupled to an equivalent of the network-node NW element that is further coupled to the P2P server.

The transfer of multimedia content between the storage means of distinct end-users is thus controlled at the end-user level and network-node NW element level rather than by a Peer-to-Peer P2P control server.

It is further also to be noted that the article of Michael DITZE M et al entitled "Improving Content Replication and QoS in Distributed Peer-to-Peer VoD Appliances" (DISTRIBUTED COMPUTING SYSTEMS WORKSHOPS, 2004 - PROCEEDINGS - 24th INTERNATIONAL CONFERENCE ON HACHIOJI, TOKYO, JAPAN) of 23-24 MAR. 2004 mentions that Video-on-Demand applications and their corresponding issues have been a long-term research topic. The commercial deployment arid exploitation of these scenarios in PAEANs (Public Authorized Enterprise Access Networks) like in e.g. hotels, schools or airport lounges, however, is still in its early stages. The reason for that are the high associated costs, the huge amount, of bandwidth requirements for high-quality video combined with the low penetration of broadband access and the leaking Quality of Service (QoS) support. This document proposed Peer-to-Peer technology that overcomes these drawbacks. The approach allows each peer in the network to act as a restricted video-server that offers a low number of selected videos to other peers. This decentralized approach overcomes the traditional drawbacks of client-server based solutions. Crucial to the success of this approach, however, is an intelligent content replication strategy that ensures that. highly frequented content is replicated across the network. This allows for innovative workload scaling to avoid local bottlenecks. Furthermore, the proposed architecture allows to transmit this content in quasi real-time. Hence, a new QoS-oriented architecture that works in concert with the above mentioned concepts is presented. It uses true point-to-point communication in order to preserve the on-Demand character of the applications.

However, here again the transfer of multimedia content between the storage means of distinct end-users is not controlled by any Peer-to-Peer P2P control server.

Another characterizing embodiment of the present invention is that said network-node NW element (M1) is coupled to a first end-user (STB1) and to a second end-user (STB2), and that said P2P control server (P2P1) is adapted to control said network-node NW element to copy multimedia content (A) from the storage means of said first end-user to the storage means of said second end-user.

In this way, the optimal path is the shortest path between the first and the second end-user. The advantage for the IPTV provider is that there is no scalability issue with respect to storage and processing load without having to invest in storage and streaming equipment (server + proxy) and BW upgrades for network links deeper in the network. Moreover, the fact that the IPTV multimedia content, e.g. VoD service, is delivered using P2P is completely transparent for the end-user.

In a variant embodiment, the present invention is characterized in that said P2P control server (P2P2) is coupled to a first network-node NW element (M2) and to a second network-node NW element (M3), said first network-node NW element being coupled to a first end-user (STB3) and said second network-node NW element being coupled to a second end-user (STB4, STB5), and in that said P2P control server is adapted to control said first and said second network-node NW elements to copy multimedia content from the storage means of said first end-user to the storage means of said second end-user.

In another variant embodiment, the present invention is characterized in that said P2P control server is coupled to another P2P control server that is coupled to at least one other end-user via another network-node NW element, and in that said P2P control server and the other P2P control server are adapted to interact with each other for controlling the transfer of multimedia content from the storage means of said other end-user to the storage means of at least one end-user of said plurality via said other network-node NW element and said one network-node NW element.

All these variants can obviously be combined in a same communication network and interact with each other.

The present invention further relates to a method to provide QoS service on top of a best-effort service in a P2P communication network wherein end-users are able to store multimedia content received from a multimedia server, and wherein multimedia content is transferred between distinct end-users via at least one network-node NW element under control of a P2P control server able to supervise and to manage the multimedia content stored in said end-users.

The general idea is that the multimedia server, e.g. a video service provider (service is typically VoD or Time Shifted TV) makes use of a P2P paradigm for distribution of multimedia or video content, whereby a peer is the end-user, but the video streaming is session based and does not take place over the Internet, but has a QoS treatment. Dedicated IPTV servers are in charge of controlling the video streaming by having an End-to-End E2E path set-up among two or more peer end-users (one being the requesting peer-client, the other(s) the peer-server(s) streaming the content) that allows such an E2E QoS. This E2E path does not need to cross the IP edge, if the peers involved are situated in the same access network or can be cross-connected still within the aggregation / metro network.

The present invention defines a server according to claim 1 and a method according to claim 10. Further embodiments are set forth in the dependent claims 2-9 and 11.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

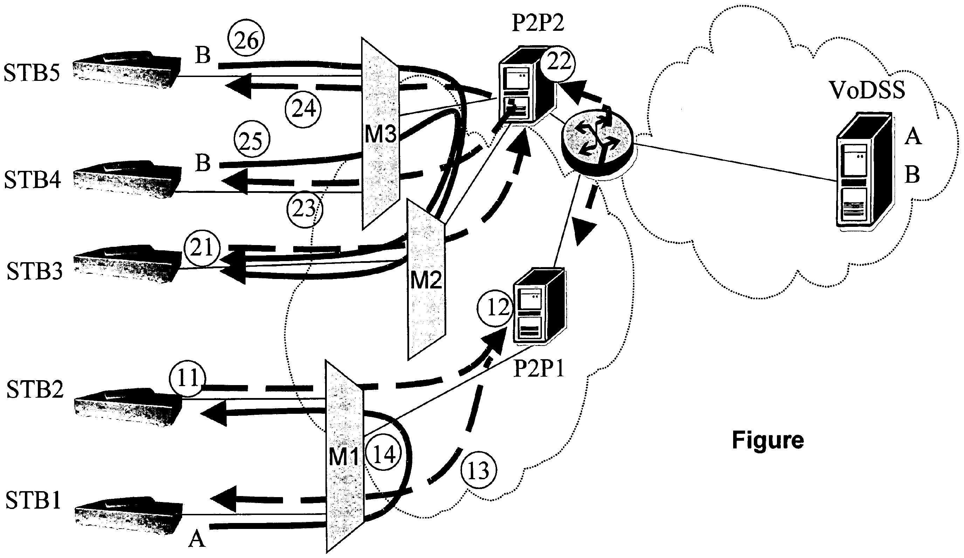

The above and other objects and features of the invention will become more apparent and the invention itself will be best understood by referring to the following description of an embodiment taken in conjunction with the accompanying drawings wherein the Figure represents a P2P control server used in a communication network, according to the invention.

The Figure shows a communication network comprising an access network to which end-users STB1 to STB5, or preferably their like-named Set-Top-Boxes, are connected. Each end-user is also called Set-Top-Box STB client. The access network comprises Peer-to-Peer P2P control servers P2P1 and P2P2 that are coupled to the end-users via network-node NW elements. In more detail, the P2P control server P2P1 is coupled to the end-users STB1 and STB2 via the network-node NW element M1, and the P2P control server P2P2 is coupled on the one hand to the end-user STB3 via the network-node NW element M2 and on the other hand to the end-users STB4 and STB5 via the network-node NW element M3. The P2P control servers P2P1 and P2P2 are further interconnected and coupled to a multimedia server VoDSS. The multimedia server VoDSS is adapted to provided multimedia content, e.g. Video-on-Demand VoD, to the end-users, or more particularly to the storage means, e.g. hard disk, located in the Set-Top-Boxes thereof, via the network-node NW elements

Initially the end-users or end-devices will get requested multimedia content using the traditional client-server interaction as mentioned in the above first known solution.

In the present invention, once this content has been requested by a sufficient number of end-users and is thus available on their respective Set-Top-Boxes, instead of the traditional client-server model, the content will be transferred to new requesting end-users using the present P2P model described below, under strict control of a P2P control server.

If the end-user behind Set-Top-Box STB2 wants to see multimedia content, e.g. Video A, and end-user STB1 has this movie still available on its storage means or hard disk, because the end-user behind STB B earlier requested/rented this video from the VoD central server VoDSS, the Video A could be streamed/ down/uploaded from STB1 to STB2. This transfer of multimedia content or Video A occurs through the network-node NW element M1 under control of the P2P control server P2P1.

The basic idea is that the video service provider makes use of a P2P paradigm for distribution of video content - whereby a peer is the end-user, but the video streaming is session based and does not take place over the Internet, but has a QoS treatment. Dedicated IPTV servers are in charge of controlling the video streaming by having an end-to-end path set-up among two or more peers (one being the requesting peer-client, the other(s) the peer-servers streaming the content) that allows such an E2E QoS. This E2E path does NOT need to cross the IP edge, if the peers involved are situated in the same access network or can be cross connected still within the aggregation/metro network.

The P2P control server P2P1 is a new Network Element, also called IPTV P2P control device/server, being enabled to provide QoS guarantee through interaction with the peer end-users and network-node NW elements in between the peers; allowing e.g. to deliver content from end-user STB1 to end-user STB2 via only the access multiplexer or network-node NW element M1 and not always via an IP edge.

The P2P control server may be integrated in a proxy to intercept requests-for-content from an end-user to IPTV service provider and to decide to either leave this question unchanged or to take care of the question by itself by instructing one or multiple STB to deliver the requested content to the demanding end-user by means of peer-to-peer, and setting-up a QoS enabled direct path.

In more details, the P2P control server makes use of the hard disk capacity of STB equipment that is under control of and managed by this P2P control server for temporary storage of video content. This content was originally provided by the IPTV provider or multimedia server VoDSS to this STB upon request by the end-user for viewing/consumption and protected by means of DRM. This way all DRM-protected content is distributed to the extreme over the IPTV provider network which now also includes (part of) the provider controlled/managed STB (and optionally the HGW too, unless this one can be transparent). The end-users STB devices hence not only act as clients but also as servers.

To enable such an architecture the IPTV operator-owned control device/server or P2P control server is in charge of mediating between server end-clients and requesting end-clients on the control plane and links with authentication, authorization, charging and DRM subsystems, as well as network-node NW elements that will be traversed by the video traffic.

Whereas E2E paths in P2P overlay networks always have to pass the IP edge, this is not necessarily the case in the proposed architecture. If the peers involved are situated in the same access network, they could be cross connected still within the aggregation/metro network. This cross connection inside network-node NW elements could be done session-based upon instruction by the P2P control servers. The P2P control server thereby also acts as a proxy with respect to the end-user-VoD server interaction.

There is however no peer-to-peer interaction on the control plane among the STB'es/end users involved, similar to the (distributed) index P2P architectures as used over the Internet. Some dedicated P2P control servers positioned in the IPTV network keep track of which content is available where and trigger the streaming or down/uploading from one location to the other.

The P2P control servers will typically interact with each other and may be located in the A&E network or deeper in the network. Each end-user STB may have a preferred P2P control server to which each request for e.g. a VoD asset is addressed. This is indicated as step 11 in the Figure where the end-user STB2 requests Video A to the P2P control server P2P1.

In a next step 12, the P2P control server P2P1 searches for the content Video A by looking in its internal database which indicates whether an end-user that is logged on, belonging to its own serving realm, has a copy of the requested content.

If no candidate is found, other P2P control servers, e.g. P2P2, may be inquired or the request is forwarded to the centralized multimedia server VoDSS.

If an end-user STB2 having a copy of Video A is found, the P2P control server P2P1 will "allocate" this end-user STB2 as server, as indicated by step 13. P2P1 then provides to STB2 the requesting destination STB1, and the data streaming will start, as indicated by step 14, via the network-node NW element M1.

During the content consumption, the P2P control server P2P1 keeps track of the session, to provide for redundancy in case e.g. the serving STB2 crashes.

Depending on the forwarding architecture within the access and aggregation/edge network and the intelligence of the access node and (switching) aggregation nodes, the P2P control server may or may not have to interact with these network-node NW elements to have the end-to-end connection set-up with the appropriate QoS. In any case the end-user should have the same (quality) experience viewing a movie sent directly from a VoD server or streamed from a peer STB. This means that both in upstream and downstream the bandwidth and maximum jitter must be guaranteed (hence the IPTV control servers will typically interface to a CAC subsystem when this is in place). This way the IPTV service making use of P2P streaming will be able to differentiate from the P2P streaming technologies that may offer the same service (but with piracy content) over the Best Effort Internet, hence with no service guarantees.

The P2P control servers also need to control the way multimedia content is uploaded/streamed from a STB, because of the potential bottle neck on the access line. The upstream streaming/loading from one server end-user STB2 to one client end-user STB1 requires that the access line is capable of handling the typical high bit rates associated with video content streaming. Alternatively a granted request for a video, results in the upstream streaming/loading of parts of that requested video content from different clients, which, when aggregated by the requesting receiver STB, combine into the original video stream. Downloading from multiple STB'es to a single requesting STB may also be practiced for redundancy reasons. The set-up of a multi-server P2P process and the streaming process that follows is depicted in the Figure as well with reference to Video B.

In this second example, Video B is first loaded form the multimedia server VoDSS into the storage means of the end-users STB4 and STB5 via the network-node NW element M3 under control of the P2P control server P2P2. When the end-users STB3 requests for Video B to its associated P2P control server P2P2, as indicated by step 21, the latter P2P2 looks in its internal database and finds (step 22) that Video B is already available from STB3 and STB4 and do no longer need to be downloaded again from the multimedia server VoDSS. The P2P control server P2P2 then instructs the end-users STB4 (step 23) and STB5 (step 24) to provide this Video B to end-user STB3. This transfer of Video B is performed from STB4 (step 25) and STB5 (step 26) to STB3 both via the network-node NW elements M3 and M2.

In the same way, the P2P control server P2P2 could also ask the P2P control server P2P1, to which it is interconnected, to interact or operate together for the transmission other multimedia content between any of the shown end-users STB; and vice versa. Several network-node NW elements could then be involved in such a transfer operation.

The strength of this solution depends on the strength of the DRM. Multimedia content is always encrypted and through usage of SW keys the duration and number of times certain VoD content can be watched (via the STB) is imposed, as in traditional DRM systems for IPTV. The encrypted content may e.g. still be available on an end-user STB, however not available anymore for viewing by this end-user because his key/viewing license is expired. In that case, the content is still kept stored on this hard disk for uploading/streaming towards other end-users STB'es that can request/purchase the VoD content. These other end-users then have to ask for the keys to the DRM subsystem.

Note that this P2P streaming may also be used for content that is user-generated and falls outside DRM. In many cases friends/ family to which the content is streamed will be served by the same IP edge, as they typically live in the same region, provided of course they are subscribed to the same (IPTV) service and access provider.

It is clear from the above that the P2P control server that supervises and manages the multimedia content in the storage means of the end-users STB do not need to be provided with storage means for multimedia content, all the content being stored within the end-users STB or in the centralized multimedia server VoDSS.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A Peer-to-Peer P2P control server (P2P1; P2P2) coupled to a plurality of end-users (STB1-2; STB3-5) via at least one network-node NW element (M1; M2, M3) in a communication network, each end-user comprising storage means for storing multimedia content (A; B) and said network-node NW element being adapted to transfer such multimedia content, said P2P control server being adapted to control the storage means of said plurality of end-users, wherein said P2P control server is further adapted to control said network-node NW element (M1; M2, M3) to transfer multimedia content between the storage means of distinct end-users (STB1-2; STB3-5); **characterized in that** said P2P control server is coupled to another P2P control server that is coupled to at least one other end-user via another network-node NW element,
and said P2P control server and the other P2P control server are adapted to interact with each other for controlling the transfer of multimedia content from the storage means of said other end-user to the storage means of at least one end-user of said plurality via said other network-node NW element and said one network-node NW element.

2. The P2P control server according to claim 1,
***characterized in that*** said network-node NW element (M1) is coupled to a first end-user (STB1) and to a second end-user (STB2),
***and in that*** said P2P control server (P2P1) is adapted to control said network-node NW element to copy multimedia content (A) from the storage means of said first end-user to the storage means of said second end-user.

3. The P2P control server according to claim 1, ***characterized in that*** said P2P control server is not provided with storage means for multimedia content.

4. The P2P control server according to claim 1, ***characterized in that*** said P2P control server is adapted to supervise and to manage the multimedia content in the storage means of said end-users.

5. The P2P control server according to claim 1,
***characterized in that*** said P2P control server (P2P2) is coupled to a first network-node NW element (M2) and to a second network-node NW element (M3), said first network-node NW element being coupled to a first end-user (STB3) and said second network-node NW element being coupled to a second end-user (STB4, STB5),
***and in that*** said P2P control server is adapted to control said first and said second network-node NW elements to copy multimedia content from the storage means of said first end-user to the storage means of said second end-user.

6. The P2P control server according to claim 1, ***characterized in that*** said end-user is a Set-Top-Box STB client.

7. The P2P control server according to claim 1, ***characterized in that*** said P2P control server (P2P1; P2P2) is further coupled to a multimedia server (VoDSS) and is adapted to control the transfer of multimedia content (A, B) from said multimedia server to at least one of said end-users (STB1-5) via said network-node NW element (M1; M2; M3).

8. The P2P control server according to claim 1, ***characterized in that*** said P2P control server is located in an access network of said communication system.

9. The P2P control server according to claim 1, ***characterized in that*** said multimedia content is video data.

10. A method to provide QoS service on top of a best-effort service in a P2P communication network wherein a plurality of end-users (STB1-5) are able to store in their storage means multimedia content (A; B) received from a multimedia server (VoDSS), and wherein multimedia content is transferred between distinct end-users via at least one network-node NW element (M1; M2, M3) under control of a P2P control server able to supervise and to manage the multimedia content stored in the storage means of said plurality of end-users; wherein said P2P control server is adapted to control the storage means of said plurality of end users, **characterised in that** said P2P control server is coupled to another P2P control server that is coupled to at least one other end-user via another network-node NW element, and said P2P control server and the other P2P control server interact with each other for controlling the transfer of multimedia content from the storage means of said other end-user to the storage means of at least one end-user of said plurality via said other network-node NW element and said one network-node NW element.

11. The method according to claim **10**, ***characterized in that*** multimedia content is video data received by end-users as a Video-on-Demand VoD service.

## Patentansprüche

1. Peer-to-Peer P2P-Kontroll-Server (P2P1; P2P2), der gekoppelt ist mit einer Vielzahl von Endbenutzern (STB1-2; STB3-5) über mindestens ein NW-Element, Network Node, (M1; M2, M3) in einem Kommunikationsnetzwerk, wobei jeder Endbenutzer Speichermittel umfasst zum Speichern von Multimedia-Content (A; B) und besagtes NW-Element ausgelegt ist zum Transferieren solchen Multimedia-Contents, wobei besagter P2P-Kontroll-Server ausgelegt ist zum Steuern der Speichermittel besagter Vielzahl von Endbenutzern, wobei besagter P2P-Kontroll-Server weiterhin ausgelegt ist zum Steuern besagten NW-Elements (M1; M2, M3) zum Transferieren von Multimedia-Content zwischen den Speichermitteln verschiedener Endbenutzer (STB1-2; STB3-5);
**dadurch gekennzeichnet, dass** besagter P2P-Kontroll-Server mit einem anderen P2P-Kontroll-Server gekoppelt ist, der mit mindestens einem anderen Endbenutzer über ein anderes NW-Element verbunden ist,
und besagter P2P-Kontroll-Server und der andere P2P-Kontroll-Server ausgelegt sind zum Interagieren miteinander zum Steuern des Transfers von Multimedia-Content vom Speichermittel besagten anderen Endbenutzers auf das Speichermittel mindestens eines Endbenutzers besagter Vielzahl über besagtes andere NW-Element und besagtes eine NW-Element.

2. P2P-Kontroll-Server nach Anspruch 1,
***dadurch gekennzeichnet, dass*** besagtes NW-Element (M1) gekoppelt ist mit einem ersten Endbenutzer (STB1) und mit einem zweiten Endbenutzer (STB2),
***und dass*** besagter P2P-Kontroll-Server (P2P1) ausgelegt ist zum Steuern besagten NW-Elements zum Kopieren von Multimedia-Content (A) von dem Speichermittel besagten ersten Endbenutzers auf das Speichermittel besagten zweiten Endbenutzers.

3. P2P-Kontroll-Server nach Anspruch 1, ***dadurch gekennzeichnet, dass*** besagter P2P-Kontroll-Server nicht ausgestattet ist mit einem Speichermittel für Multimedia-Content.

4. P2P-Kontroll-Server nach Anspruch 1, ***dadurch gekennzeichnet, dass*** besagter P2P-Kontroll-Server ausgelegt ist zum Überwachen und Verwalten des Multimedia-Contents in dem Speichermittel für besagte Endbenutzer.

5. P2P-Kontroll-Server nach Anspruch 1,
***dadurch gekennzeichnet, dass*** besagter P2P-Kontroll-Server (P2P2) gekoppelt ist mit einem ersten NW-Element (M2) und mit einem zweiten NW-Element (M3), wobei besagtes erste NW-Element (Network Node) gekoppelt ist mit einem ersten Endbenutzer (STB3) und besagtes zweites NW-Element gekoppelt ist mit einem zweiten Endbenutzer (STB4, STB5),
***und dass*** besagter P2P-Kontroll-Server ausgelegt ist zum Steuern besagten ersten und besagten zweiten NW-Elements zum Kopieren von Multimedia-Content (A) von dem Speichermittel besagten ersten Endbenutzers auf das Speichermittel besagten zweiten Endbenutzers.

6. P2P-Kontroll-Server nach Anspruch 1, ***dadurch gekennzeichnet, dass*** es sich bei besagtem Endbenutzer um einen STB-Client, Set Top Box, handelt.

7. P2P-Kontroll-Server nach Anspruch 1, ***dadurch gekennzeichnet, dass*** besagter P2P-Kontroll-Server (P2P1; P2P2) weiterhin gekoppelt ist mit einem Multimedia-Server (VoDSS) und ausgelegt ist zum Steuern des Transfers von Multimedia-Content (A, B) von besagtem Multimedia-Server auf mindestens einen besagter Endbenutzer (STB1-5) über besagtes NW-Element (M1; M2; M3).

8. P2P-Kontroll-Server nach Anspruch 1, ***dadurch gekennzeichnet, dass*** besagter P2P-Kontroll-Server in einem Zugangsnetzwerk besagten Kommunikationssystems lokalisiert ist.

9. P2P-Kontroll-Server nach Anspruch 1, ***dadurch gekennzeichnet, dass*** es sich bei besagtem Multimedia-Content um Videodaten handelt.

10. Verfahren zum Bereitstellen eines QoS-Dienstes zusätzlich zu einem Best-Effort-Dienst in einem P2P-Kommunikationsnetzwerk, wobei eine Vielzahl von Endbenutzern (STB1-5) in der Lage ist, in ihren Speichermitteln Multimedia-Content (A; B) zu speichern, der empfangen worden ist von einem Multimedia-Server (VoDSS), und wobei Multimedia-Content transferiert wird zwischen verschiedenen Endbenutzern über mindestens ein NW-Element (M1; M2, M3) unter Kontrolle eines P2P-Kontroll-Servers, der in der Lage ist, den Multimedia-Content zu überwachen und zu verwalten, der in den Speichermitteln besagter Vielzahl von Endbenutzern gespeichert ist, wobei besagter P2P-Kontroll-Server ausgelegt ist zum Steuern der Speichermittel besagter Vielzahl von Endbenutzern, **dadurch gekennzeichnet, dass** besagter P2P-Kontroll-Server gekoppelt ist mit einem anderen P2P-Kontroll-Server, der gekoppelt ist mit mindestens einem anderen Endbenutzer über ein anderes NW-Element, und besagter P2P-Kontroll-Server und der andere P2P-Kontroll-Server ausgelegt sind zum Interagieren miteinander zum Steuern des Transfers von Multimedia-Content vom Speichermittel besagten anderen Endbenutzers auf das Speichermittel mindestens eines Endbenutzers besagter Vielzahl über besagtes andere NW-Element und besagtes eine NW-Element.

11. Verfahren nach Anspruch **10**, ***dadurch gekennzeichnet, dass*** es sich bei dem Multimedia-Content um Videodaten handelt, die von Endbenutzern als ein VoD-Dienst, Video on Demand, empfangen werden.

## Revendications

1. Serveur de contrôle poste à poste P2P (P2P1 ; P2P2) couplé à une pluralité d'utilisateurs finaux (STB1-2 ; STB3-5) par l'intermédiaire d'au moins un élément de noeud de réseau NW (M1 ; M2, M3) dans un réseau de communication, chaque utilisateur final comprenant des moyens de stockage pour stocker un contenu multimédia (A ; B) et ledit élément de noeud de réseau NW étant adapté pour transférer ce contenu multimédia, ledit serveur de contrôle P2P étant adapté pour contrôler les moyens de stockage de ladite pluralité d'utilisateurs finaux, ledit serveur de contrôle P2P étant en outre adapté pour contrôler ledit élément de noeud de réseau NW (M1 ; M2, M3) pour transférer un contenu multimédia entre les moyens de stockage d'utilisateurs finaux distincts (STB1-2 ; STB3--5) ;
**caractérisé en ce que** ledit serveur de contrôle P2P est couplé à un autre serveur de contrôle P2P qui est couplé à au moins un autre utilisateur final par l'intermédiaire d'un autre élément de noeud de réseau NW,
et ledit serveur de contrôle P2P et l'autre serveur de contrôle P2P sont adaptés pour interagir l'un avec l'autre afin de contrôler le transfert du contenu multimédia à partir des moyens de stockage dudit autre utilisateur final vers les moyens de stockage d'au moins un utilisateur final de ladite pluralité par l'intermédiaire dudit autre élément de noeud de réseau NW et dudit élément de noeud de réseau NW.

2. Serveur de contrôle P2P selon la revendication 1,
***caractérisé en ce que*** ledit élément de noeud de réseau NW (M1) est couplé à un premier utilisateur final (STB1) et à un second utilisateur final (STB2),
***et en ce que*** ledit serveur de contrôle P2P (P2P1) est adapté pour contrôler ledit élément de noeud de réseau NW pour copier un contenu multimédia (A) à partir des moyens de stockage dudit premier utilisateur final vers les moyens de stockage dudit second utilisateur final.

3. Serveur de contrôle P2P selon la revendication 1, ***caractérisé en ce que*** ledit serveur de contrôle P2P ne dispose pas de moyens de stockage pour un contenu multimédia.

4. Serveur de contrôle P2P selon la revendication 1, ***caractérisé en ce que*** ledit serveur de contrôle P2P est adapté pour superviser et pour gérer le contenu multimédia dans les moyens de stockage desdits utilisateurs finaux.

5. Serveur de contrôle P2P selon la revendication 1,
***caractérisé en ce que*** ledit serveur de contrôle P2P (P2P2) est couplé à un premier élément de noeud de réseau NW (M2) et à un second élément de noeud de réseau NW (M3), ledit premier élément de noeud de réseau NW étant couplé à un premier utilisateur final (STB3) et ledit second élément de noeud de réseau NW étant couplé à un second utilisateur final (STB4, STB5),
***et en ce que*** ledit serveur de contrôle P2P est adapté pour contrôler ledit premier et ledit second élément de noeud de réseau NW pour copier un contenu multimédia à partir des moyens de stockage dudit premier utilisateur final vers les moyens de stockage dudit second utilisateur final.

6. Serveur de contrôle P2P selon la revendication 1, ***caractérisé en ce que*** ledit utilisateur final est un client de boîtier décodeur STB.

7. Serveur de contrôle P2P selon la revendication 1, ***caractérisé en ce que*** ledit serveur de contrôle P2P (P2P1 ; P2P2) est en outre couplé à un serveur multimédia (VoDSS) et est adapté pour contrôler le transfert de contenu multimédia (A, B) à partir dudit serveur multimédia vers au moins un desdits utilisateurs finaux (STB1-5) par l'intermédiaire dudit élément de noeud de réseau NW (M1 ; M2 ; M3).

8. Serveur de contrôle P2P selon la revendication 1, ***caractérisé en ce que*** ledit serveur de contrôle P2P est situé dans un réseau d'accès dudit système de communication.

9. Serveur de contrôle P2P selon la revendication 1, ***caractérisé en ce que*** ledit contenu multimédia représente des données vidéo.

10. Procédé pour fournir un service QoS en plus d'un service au mieux dans un réseau de communication P2P, dans lequel une pluralité d'utilisateurs finaux (STB 1-5) peuvent stocker dans leurs moyens de stockage un contenu multimédia (A ; B) provenant d'un serveur multimédia (VoDSS), et dans lequel le contenu multimédia est transféré entre des utilisateurs finaux distincts par l'intermédiaire d'au moins un élément de noeud de réseau NW (M1 ; M2, M3) sous le contrôle d'un serveur de contrôle P2P pouvant superviser et gérer le contenu multimédia stocké dans les moyens de stockage de ladite pluralité d'utilisateurs finaux ;
dans lequel ledit serveur de contrôle P2P est adapté pour contrôler les moyens de stockage de ladite pluralité d'utilisateurs finaux, **caractérisé en ce que** ledit serveur de contrôle P2P est couplé à un autre serveur de contrôle P2P qui est couplé à au moins un autre utilisateur final par l'intermédiaire d'un autre élément de noeud de réseau NW, et ledit serveur de contrôle P2P et l'autre serveur de contrôle P2P interagissent l'un avec l'autre pour contrôler le transfert de contenu multimédia à partir des moyens de stockage dudit autre utilisateur final vers les moyens de stockage d'au moins un utilisateur final de ladite pluralité par l'intermédiaire dudit autre élément de noeud de réseau NW et dudit élément de noeud de réseau NW.

11. Procédé selon la revendication **10**, ***caractérisé en ce que*** le contenu multimédia représente des données vidéo reçues par des utilisateurs finaux en tant que service de vidéo à la demande VoD.
